# EUROPÄISCHE PATENTANMELDUNG

(11) **EP 2 317 032 A2**
(43) Veröffentlichungstag der Anmeldung: **04.05.2011**
(21) Anmeldenummer: 10189137.2
(22) Anmeldetag: 27.10.2010
(51) Int. Cl.: E04H 12/04, E04H 12/24, E04B 1/26

(54) **Vorrichtung zum Abbinden eines Rundholzmastes**

(30) Priorität: 27.10.2009 DE 102009050861
(71) Anmelder: INDUO Gesellschaft zur Verwertung von Schutzrechten mbH & Co. KG, 41352 Korschenbroich (DE)
(72) Erfinder: Reichartz, Paul, 41352 Korschenbroich (DE)
(74) Vertreter: Lenzing Gerber Stute

(57) **Zusammenfassung**

Es wird eine Vorrichtung für den Abbund eines Rundholzes vorgeschlagen, mit der es möglich ist, in die Außenfläche des Rundholzes einzubringende Bohrungen genau auszurichten. Die Vorrichtung ist gekennzeichnet durch
a. zwei Klemmrahmen (11,12), die parallel zueinander verschiebbar sind und deren Abstand feststellbar ist, so dass ein Rundholzmast (1) dazwischen eingeklemmt werden kann,
b. wobei mindestens einer der beiden Klemmrahmen (11,14) mindestens eine Bohrschablone (26,27,28,29,31,32) trägt, die insbesondere in einer zur Längsachse des Rundholzes im Wesentlichen parallelen Ebene liegt und zwei oder mehrere Bohrbuchsen (33) aufweist, und
c. wobei jeder Klemmrahmen (11,12) mindestens zwei Klemmbügel (13,14,15,16) aufweist, die in einem Abstand zueinander angeordnet sind und quer zur Längsachse des Rundholzmastes verlaufen,
d. wobei jeder Klemmbügel mindestens zwei in einem Winkel zueinander stehende Anlageflächen für die Außenseite des Rundholzes aufweist.

Auch wird ein Abbundverfahren mit Hilfe einer solchen Vorrichtung vorgeschlagen.

## Beschreibung

Die vorliegende Erfindung betrifft eine Vorrichtung für den Abbund eines Rundholzes, insbesondere eines Rundholzmastes, sowie ein Abbundverfahren.

Aus der DE 10 2006 018 089 A1 sowie der DE 10 2007 033 829 A1 sind verschiedene Rundholzmastetypen wie beispielsweise Einzelmaste, Doppelmaste oder A-Maste bekannt, an deren oberen Enden Traversen, beispielsweise zum Halten von Stromkabeln, befestigt werden. Zur Befestigung werden Anker verwendet, deren Ankerstifte an der Außenseite eines oder mehrerer den Mast bildenden Rundhölzer in hierfür vorgesehene Bohrungen eingesetzt werden. Je nach Art der Anker können diese an der Außenseite des Rundholzes, in das sie mit ihren Ankerstiften eingreifen, festgeschraubt werden. Ein besonderer Vorteil einer derartigen Anker-basierten Befestigung besteht darin, dass ihre Statik berechenbar ist.

Um die Berechenbarkeit zu gewährleisten, ist es notwendig, dass die Bohrungen für die Ankerstifte eines Ankers genau zueinander positioniert sind. Auch ist es erstrebenswert, die Lage der Bohrungen an der Längsachse des Rundholzmastes auszurichten, und auch die Bohrungen für verschiedene an einen Mast anzusetzenden Anker genau zueinander auszurichten, letzteres zumindest für die Anker, die gemeinsam ein Anbauteil wie beispielsweise eine Traverse tragen. Dies ist insoweit problematisch, als Rundholzmaste aus Baumstämmen hergestellt werden, die in den seltensten Fällen gerade gewachsen sind, sondern meist eine gewisse Krümmung in Längsrichtung haben, so dass die Längsachse, die durch eine gedachte Linie zwischen der Rundholzmitte des einen Endes und der Rundholzmitte des anderen Endes definiert ist, nicht entlang der Mitte des Rundholzes verläuft. Somit verläuft auch der Umfang des Rundholzmastes meist nicht entlang einer Kreisbahn um die Längsachse des Mastes herum, sondern ist zur Längsachse versetzt und meist auch nicht gänzlich kreisrund.

Die Aufgabe der vorliegenden Erfindung besteht darin, eine Vorrichtung und ein Verfahren zur Verfügung zu stellen, mit der bzw. mit dem es möglich ist, in die Außenfläche eines Rundholzes einzubringende Bohrungen genau auszurichten.

Diese Aufgabe wird mit einer Vorrichtung mit den Merkmalen des Anspruchs 1 sowie mit einem Verfahren gemäß Anspruch 10 gelöst.

Als Rundholz wird hier und im Folgenden insbesondere ein Holz verstanden, das als zusammenhängendes Stück aus dem Stammholz oder dem Mittelstamm eines Baumes gebildet ist. Unter einem Rundholzmast wird ein aus dem Stammholz bzw. dem Mittelstamm eines Baumes gebildeter Holzmast verstanden.

Unter einem Klemmrahmen wird hier und im Folgenden ein solcher verstanden, der mindestens zwei in Längsrichtung des Rundholzes zueinander beabstandete Klemmbügel aufweist, mit denen das Rundholz gefasst werden kann. Dabei weist ein Klemmbügel mindestens zwei Anlageflächen für den Holzmast auf, die in einem Winkel zueinander stehen. So kann ein Klemmrahmen mindestens von zwei Seiten aus die Lage eines Rundholzmastes fixieren.

Als Bohrschablone wird hier und im Folgenden eine solche mit mindestens zwei Bohrbuchsen verstanden, wobei die Bohrschablonen in einer zur Längsachse des Rundholzmastes im Wesentlichen parallelen Ebene liegt bzw. deren Bohrachsen schräg oder quer zu einer zur Längsachse des Rundholzmastes parallelen Ebene liegen.

Ein Grundgedanke der Erfindung besteht darin, das Rundholz für den Abbund mit zwei wie Klemmbacken wirkende Klemmrahmen einzufassen, wobei es je nach Beschaffenheit des Rundholzes durchaus möglich, dass nicht alle Anlageflächen am Rundholz anliegen, wenn das Rundholz zwischen den Klemmrahmen eingeklemmt ist.

An mindestens einem dieser Klemmrahmen sind wahlweise eine oder auch mehrere Bohrschablonen angeordnet. Die Positionierung von "nur" einer Bohrschablone an einem Rundholz mit der erfindungsgemäßen Vorrichtung ist bereits insoweit von Vorteil ist, als durch die Vorrichtung wirkungsvoll vermieden werden kann, dass die Bohrschablone beim Bohren verrutscht, und als eine von der Form der Außenfläche, in die gebohrt werden soll, unabhängige Positionierung der Bohrschablone möglich ist. Tragen die beiden Klemmrahmen mehrere Bohrschablonen, besteht der weitere Vorteil darin, dass die Bohrschablonen zueinander ausgerichtet sind, beispielsweise in Bezug auf ihren Abstand zum Mastende ebenso wie in Bezug auf den Winkel der Bohrlochachsen zueinander. Insbesondere der letztgenannte Vorteil ergibt sich unter anderem daraus, dass die Klemmrahmen lediglich parallel zueinander verschiebbar sind.

In besonders bevorzugter Ausgestaltung der erfindungsgemäßen Vorrichtung sind mindestens zwei in Richtung der Längsachse des Rundholzes zueinander beabstandet angeordnete Fixierungsmittel zum Fixieren der Lage des Rundholzmastes zwischen den Klemmrahmen vorgesehen. Als Fixierungsmittel kommen insbesondere solche in Betracht, die spitz und deren Spitze insbesondere in Form eines Kegels ausgebildet sind. Diese Fixierungsmittel können sich in die Oberfläche des Rundholzes eindrücken, wenn die Klemmrahmen zum Einklemmen des Rundholzes parallel aufeinander zu bewegt werden. Dadurch kann äußerst wirkungsvoll verhindert werden, dass sich das Rundholz innerhalb der Klemmbacken beim Einklemmen verdreht. Somit wird es gerade mit den Fixierungsmitteln möglich, die erfindungsgemäße Vorrichtung entlang der Längsachse des Rundholzes und damit auch die Bohrungen an der Längsachse des Rundholzes auszurichten, unabhängig davon, ob das Rundholz gerade oder krumm gewachsen ist.

Sinnvollerweise sind die Fixierungsmittel auf den Anlageflächen der Klemmbügel angeordnet, da sie beim Einklemmen des Rundholzes am Schnellsten mit dem Rundholz in Berührung kommen, so dass die Fixierungsmittel vergleichsweise kurz ausgebildet sein können. Die Fixierungsmittel müssen aber nicht zwingend an den Anlageflächen ausgebildet sein, es ist ohne Weiteres möglich, dass sie an anderen Teilen der Vorrichtung befestigt sind, sofern sichergestellt ist, dass zumindest zwei in Richtung der Längsachse des Rundholzes zueinander beabstandete Fixierungsmittel am Rundholz angreifen, sobald Anlageflächen beider Klemmrahmen am Rundholz anliegen. In einer bevorzugten Ausgestaltung der Erfindung sind allerdings an allen Anlageflächen mindestens eines der beiden Klemmrahmen Fixierungsmittel vorgesehen.

Überraschend hat sich herausgestellt, dass sich die Fixierung der Lage des Rundholzes zwischen den Klemmbacken insbesondere dann besonders sicher gestaltet, wenn die Fixierungsmittel federnd gelagert sind. Hierdurch passt sich die effektive Länge des Fixierungsmittels automatisch an die Abmaße des Rundholzes an.

Grundsätzlich ist es möglich, die beiden Klemmrahmen über einen seitlichen Spindeltrieb, gegebenenfalls in Kombination mit einer Schienenführung auf der gegenüberliegenden Seite der Klemmrahmen, miteinander zu verbinden, wobei der Spindeltrieb sowohl manuell als auch motorisch betätigbar sein kann. Als bevorzugt hat sich die Verwendung von Pneumatikzylindern zum Verbinden der Klemmbacken miteinander und parallelen Verschieben der Klemmbacken zueinander herausgestellt, da mit einem geeigneten Druckluftaggregat ausreichende Kräfte zum sicheren Einklemmen des Rundholzes zwischen den Klemmrahmen aufgebracht werden können und das Einklemmen des Rundholzes gleichzeitig vergleichsweise schnell erfolgen kann. Hydraulisch betätigte Zylinder können ähnlich bevorzugt sein, allerdings ist dabei der gerätetechnische Aufwand größer.

Eine ebenfalls bevorzugte Ausgestaltung der erfindungsgemäßen Vorrichtung ist gekennzeichnet durch einen insbesondere einstellbaren Anschlag zum Festlegen des Abstandes der Klemmrahmen zu einem Ende des Rundholzes.

Insbesondere wenn die Klemmrahmen spiegelsymmetrisch zueinander ausgebildet sind, ist es beispielsweise ohne weiteres möglich, Bohrschablonen um 180° versetzt zueinander anzuordnen. Dies ermöglicht eine genau gegenüberliegende Anordnung von Bohrungen an einem Rundholz, was insbesondere für das Vorbohren von Ausnehmungen für Ankerstifte von gegenüberliegenden Ankern zum Befestigen von Traversen an Einzelmasten von besonderem Vorteil ist.

In einer weiteren bevorzugten Ausführungsform ist mindestens ein mindestens eine Bohrschablone tragender Klemmrahmen von der Vorrichtung lösbar, so dass er einseitig auf einen Holzmast aufgelegt werden kann. Damit ist es möglich, den Klemmrahmen für Holzmastkonstruktionen in Fällen einzusetzen, in denen das Auf- oder Anbringen der Vorrichtung in ihrer Gesamtheit an das Rundholz nicht oder nur mit übermäßigem Aufwand möglich ist.

In bevorzugter Ausgestaltung ist mindestens einer der Klemmrahmen, insbesondere der lösbare Klemmrahmen, vorzugsweise an einer oder beiden Stirnseiten, mit mindestens einer Markierung zum Ausrichten des Klemmrahmens am Rundholz versehen. Mit einer solchen Markierung kann der Klemmrahmen alleine oder die Vorrichtung in ihrer Gesamtheit beispielsweise an einer Schlagschnur, die von einer zur anderen Stirnseite des Rundholzes gespannt ist und an seiner Außenseite verläuft, um den Verlauf der Längsachse des Rundholzes zu markieren, ausgerichtet werden.

Im Folgenden wird die Erfindung anhand von Figuren, die unter anderem ein bevorzugtes Ausführungsbeispiel zeigen, näher erläutert.

Es zeigen:
- Fig.1: einen Querschnitt eines Rundholzmastes mit zwei daran befestigten Ankern;
- Fig. 2: eine Ausführungsform einer erfindungsgemäßen Vorrichtung in perspektivischer Ansicht mit eingeklemmtem Rundholz;
- Fig. 3: die in Fig. 2 dargestellte Vorrichtung in Seitenansicht;
- Fig. 4: eine Abbildung der in den Figuren 2 und 3 dargestellten Vorrichtung ohne Rundholz;
- Fig. 5: eine Detailansicht der in den Fig. 2 bis 4 dargestellten Vorrichtung;
- Fig. 6: eine Abbildung eines von der erfindungsgemäßen Vorrichtung gelösten Klemmrahmens, der auf einem Rundholz angeordnet ist;
- Fig.7: eine Detailansicht des von der erfindungsgemäßen Vorrichtung gelösten Klemmrahmens; und
- Fig. 8: ein mit einem von der erfindungsgemäßen Vorrichtung gelösten Klemmrahmen abgebundenen und mit Verbundankern versehenen Rundholzmast.

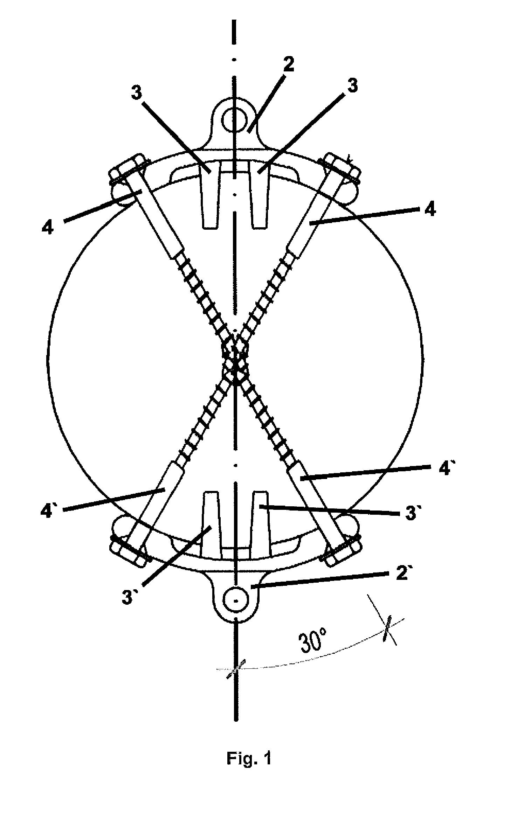

Figur 1 zeigt den Querschnitts eines Rundholzmastes 1 mit gegenüberliegenden Verbundankern 2, 2', die mit Ankerstiften 3, 3' in den Rundholzmast 1 eingreifen und über seitlich am Anker angeordnete, nahezu radial zum Rundholzmast 1 verlaufende Schrauben 4, 4' am Rundholzmast 1 befestigt sind. Mit der erfindungsgemäßen Vorrichtung können sowohl die Bohrungen für die Ankerstifte, als auch Vorbohrungen für die Schrauben in den Rundholzmast eingebracht werden.

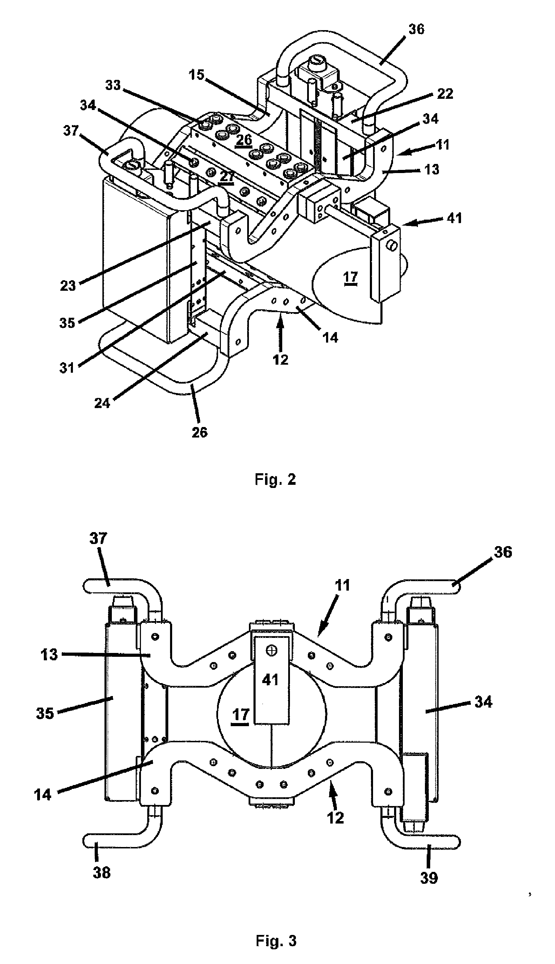

Die in den Figuren 2 bis 5 dargestellte Vorrichtung weist einen oberen Klemmrahmen 11 und einen unteren Klemmrahmen 12 auf, die im Wesentlichen spiegelsymmetrisch ausgebildet sind. So weist jeder der Klemmrahmen stirnseitig einen vorderen Klemmbügel 13, 14 und einen hinteren Klemmbügel 15, 16 auf.

Die Klemmbügel 13, 14, 15, 16 verlaufen in einem mittleren Bereich horizontal und sind seitlich davon in Richtung zum einzuklemmenden Rundholz 17 hin um einen Winkel von ca. 30° gekröpft, so dass sich drei schräg zueinander verlaufende Anlageflächen für das Rundholz 17 ergeben. Zu ihren Enden hin sind die Klemmbügel nach oben bzw. unten abgebogen.

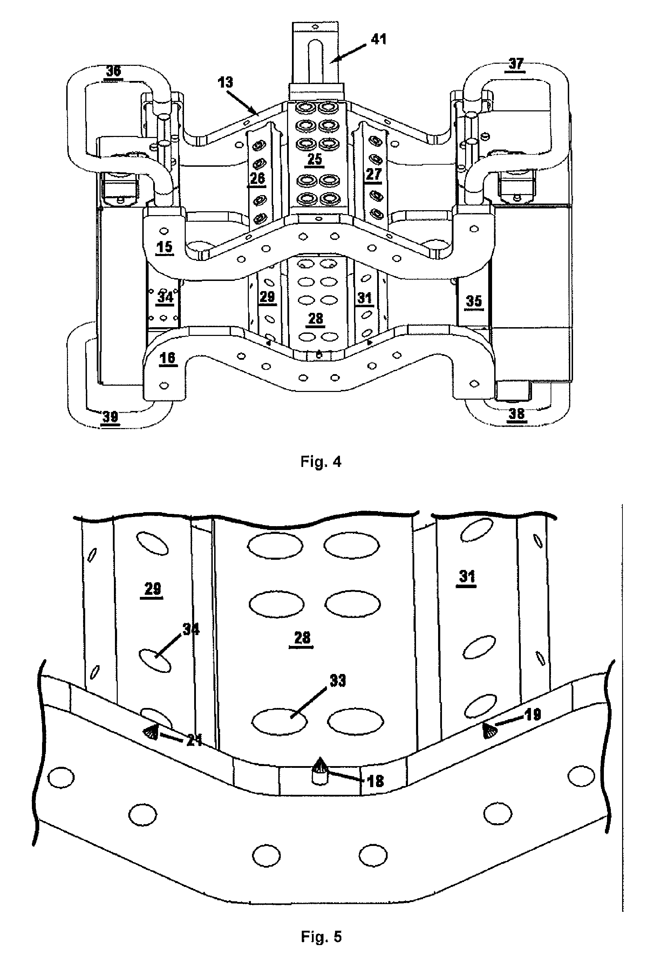

Wie insbesondere in den Figuren 4 und 5 zu sehen ist, ist in jede der sich ergebenden Anlageflächen der Klemmbügel 13, 14, 15, 16 in etwa im Bereich ihrer Mitte ein Stift 18, 19, 21 mit einer kegelförmigen Spitze eingelassen, der federnd gelagert ist. Damit wird erreicht, dass das Rundholz 17 in eingeklemmter Position mindestens mit den Stiften in Verbindung steht, wenn es aufgrund der Geometrie des Rundholzes nicht möglich ist, dass das Rundholz an allen Anlageflächen anliegt. Die Stifte dienen zur Sicherung der Position des zwischen den Klemmrahmen eingeklemmten Rundholzes, und wirken insbesondere auch effektiv gegen ein Verdrehen des Rundholzes während des Abbundes.

Die miteinander korrespondierenden Enden der Klemmbügel 13, 14, 15, 16 eines Klemmrahmens 11, 12 sind über Längsstreben 22, 23, 24, 25 miteinander verbunden.

Zwischen den Abschnitten der Klemmbügel 13, 15 und 14, 16 eines Klemmrahmens 11, 12, die die Anlageflächen für das Rundholz 17 bilden, sind Bohrschablonen 26, 27, 28, 29, 31, 32 montiert, in die eine Vielzahl von Bohrbuchsen 33 eingelassen sind. Die Bohrschablonen 26 und 29 sind hier für das Bohren von Stiftlöchern für Ankerstifte und die anderen Bohrschablonen für das Setzen von Vorbohrungen für Befestigungsschrauben vorgesehen. Die Bohrbuchsen 33 dienen als Führung für Bohrer zum Bohren der Stiftlöcher bzw. der Vorbohrungen. Wahlweise sind die Bohrschablonen 26, 27, 28, 29, 31, 32 und/oder die Bohrbuchsen 33 austauschbar montiert, so dass beispielsweise das mit den Bohrschablonen erzeugbare Bohrmuster von Bohrungen bzw. Vorbohrungen an den Durchmesser des Rundholzes und den mit dem Rundholz zu verwendenden Ankertyp angepasst werden kann.

Die jeweils übereinander liegenden Längsstreben beider Klemmrahmen 11, 12 sind über jeweils einen Druckluftzylinder 34, 35 (hier gezeigt mit Schutzabdeckung und Schaltarmatur) miteinander verbunden und können hierüber parallel zueinander verschoben werden. Die Druckluftzylinder 34, 35 sind derart dimensioniert, dass eine ausreichende Klemmkraft aufgebracht werden kann, um ein Rundholz 17 so fest zwischen den Klemmrahmen einzuspannen, dass das Rundholz seine Lage beim Abbund nicht verändert.

An jeder der Längsstreben 17, 18, 19, 21 sind Handgriffe 36, 37, 38, 39 befestigt.

Im mittleren Bereich des oberen Klemmbügels 13 ist ein parallel zur gedachten Rundholzlängsachse angeordneter, abnehmbarer Längenanschlag 41 zum Festlegen des axialen Abstandes zwischen den Bohrschablonen und dem Ende des Rundholzes (Mastkopf) vorgesehen, dessen Länge vorzugsweise durch eine nicht dargestellte Rastvorrichtung auf bestimmte Maße eingestellt werden kann.

Ein bevorzugtes Abbundverfahren für den Abbund eines Rundholzmastes erfolgt folgendermaßen:

Für den Abbund eines Rundholzmastes für den Einsatz der oben beschriebenen Verbundankern wird die Vorrichtung zunächst an eine Druckluftversorgung angeschlossen. Dann wird die Vorrichtung mit "geöffneten", also auseinander gefahrenen, Klemmrahmen auf das abzubindende Rundholzmastende, üblicherweise der Mastzopf, aufgesetzt, indem die Vorrichtung über das Rundholzmastende geschoben wird, bis dass das Mastende (bzw. der First des Dachschnittes des Mastzopfes) am Längenanschlag anliegt, und der obere der beiden Klemmrahmen auf den Rundholzmast aufgelegt wird. Der First des Dachschnittes des Rundholzmastes sollte vorzugsweise parallel zu den Achsen der Bohrungen für die Ankerstifte liegen. Danach wird die Bohrbildachse, die parallel zu den Längsachsen der Bohrschablonen verläuft, an der Mastachse ausgerichtet, wobei die Mastachse die gedachten Linie zwischen den Mittelpunkten der Rundholzmastenden entspricht, so dass beispielsweise bei aufgestelltem Mast das Lot von der Mitte des Firstes des Dachschnittes im Idealfall den Mittelpunkt des Mastfußes trifft. Dann werden die Druckluftzylinder betätigt und der Rundholzmast zwischen den Klemmrahmen eingeklemmt. Die konischen Stiftlöcher für die Ankerstifte werden mit Spezialbohrern erzeugt, die konisch ausgebildet sind und einen umlaufenden Kragen im Bereich des Bohrerschaftes als Bohrtiefeneinstellung haben. Außerdem werden die Vorbohrungen für die Schrauben zur Befestigung der Anker gebohrt. Dann wird der Rundholzmast um 180° gedreht und die Bohrungen auf der nun oben liegenden Seite des Mastes gesetzt. Abschließend wird die Vorrichtung durch freigeben der Klemmrahmen gelöst.

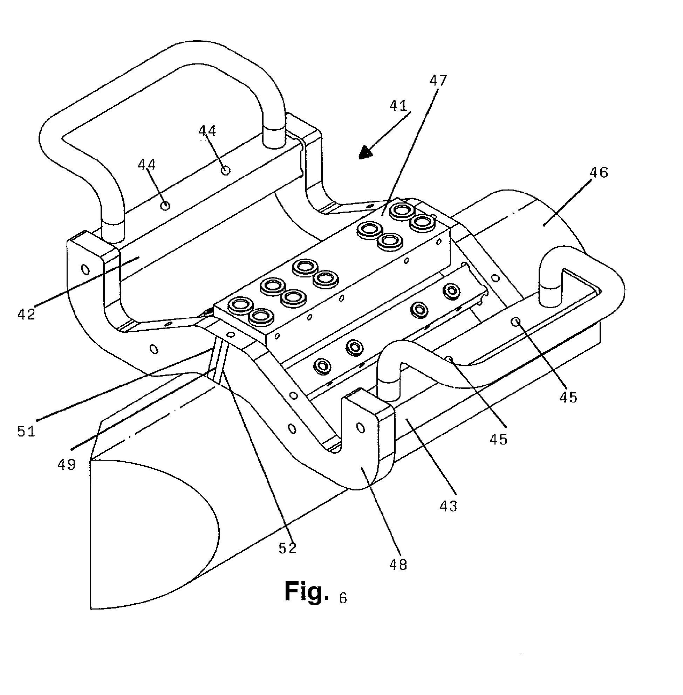

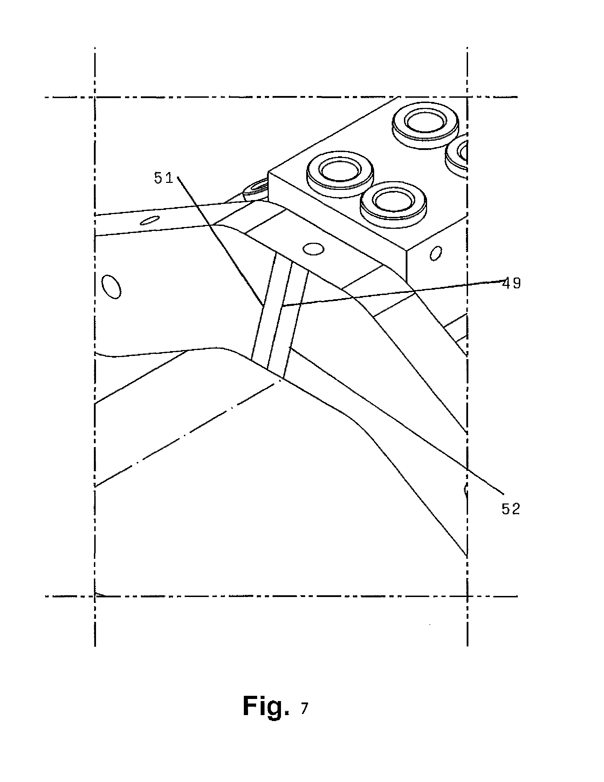

Fig. 6 zeigt einen von der erfindungsgemäßen Vorrichtung gelösten Klemmrahmen 41, der beispielsweise über eine Schraubverbindung mit den Druckluftzylindern einer Abbundvorrichtung verbunden sein kann. Der Klemmrahmen 41 entspricht prinzipiell den in den Figuren 2 bis 5 dargestellten Klemmrahmen 11, 12. An seinen Längsstreben 42, 43 sind Durchgangsbohrungen (44, 45) vorgesehen, über die der Klemmrahmen an den Druckluftzylindern der Abbundvorrichtung mit Schraubbolzen befestigt werden kann. Er kann getrennt von der Abbundvorrichtung verwendet werden, um Bohrmuster in ein Rundholz an Stellen einzubringen, an denen dies mit der vollständigen Vorrichtung gar nicht oder nur umständlich möglich ist. Der Klemmrahmen 41 kann einfach auf das Rundholz 46 an geeigneter Stelle aufgelegt und dann beispielsweise mit einem Spanngurt festgezurrt werden, bevor die Bohrlöcher über die Bohrschablone 47 in das Rundholz 46 gebohrt werden. In der in Figur 7 dargestellten Teilansicht sind an der Außenseite des vorderen Klemmbügels 48 des Klemmrahmens 41 mehrere Markierungsstriche, nämlich ein mittlerer Markierungsstrich 49 und zwei seitliche Markierungsstriche 51, 52, die jeweils in gleichem Abstand vom mittleren Strich 49 angeordnet sind, vorgesehen. Entsprechende Markierungsstriche sind auch an der Außenseite des zweiten Klemmbügels des Klemmrahmens vorgesehen. Diese Markierungsstriche 49, 51, 52 dienen dazu, mehrere Bohrmuster gleichmäßig entlang einer Schlagschnur (oder einem anderen Mittel zum Markieren einer Linie zum Ausrichten der Bohrmuster) zu positionieren oder entlang einer Schlagschnur mehrere Bohrmuster mit zueinander versetzten Längsachsen zu bohren.

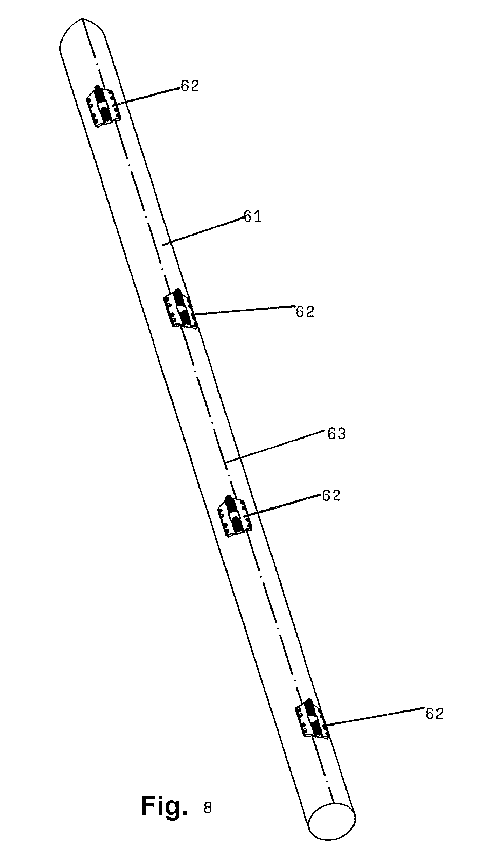

Figur 8 zeigt einen Rundholzmast 61, in den Verbundanker 62 eingesetzt sind, deren Längsachsen jeweils in gleichem Abstand zu einer Schlagschnur 63 (hier als strichpunktierte Linie gezeigt) alternierend nach rechts und nach links versetzt verlaufen. Jeder der Verbundanker 62 sitzt in einem mit einem gelösten Klemmrahmen erzeugten Bohrlochmuster, das zur Schlagschnur 63 entsprechend versetzt gebohrt wurde. Es versteht sich von selbst, dass der Klemmrahmen, der für das Bohren der Bohrmuster verwendet wird, nicht zwingend so ausgebildet sein muss, dass er mit der erfindungsgemäßen Abbundvorrichtung verbunden werden kann. Der Klemmrahmen kann auch ohne Verbindungsmittel als eigenständiges Werkzeug hergestellt bzw. zur Verfügung gestellt werden.

## Patentansprüche

1. Vorrichtung für den Abbund eines Rundholzes, insbesondere eines Rundholzmastes, **gekennzeichnet durch**
a. zwei Klemmrahmen, die parallel zueinander verschiebbar sind und deren Abstand feststellbar ist, so dass ein Rundholzmast dazwischen eingeklemmt werden kann,
b. wobei mindestens einer der beiden Klemmrahmen mindestens eine Bohrschablone trägt, die insbesondere in einer zur Längsachse des Rundholzes im Wesentlichen parallelen Ebene liegt und zwei oder mehrere Bohrbuchsen aufweist, und
c. wobei jeder Klemmrahmen mindestens zwei Klemmbügel aufweist, die in einem Abstand zueinander angeordnet sind und quer zur Längsachse des Rundholzes verlaufen,
d. wobei jeder Klemmbügel mindestens zwei in einem Winkel zueinander stehende Anlageflächen für die Außenseite des Rundholzes aufweist.

2. Vorrichtung nach Anspruch 1, **dadurch gekennzeichnet, dass** mindestens zwei in Richtung der Längsachse des Rundholzes zueinander beabstandet angeordnete Fixierungsmittel zum Fixieren der Lage des Rundholzmastes zwischen den Klemmrahmen vorgesehen sind.

3. Vorrichtung nach Anspruch 2, **dadurch gekennzeichnet, dass** die Fixierungsmittel spitz und deren Spitze insbesondere in Form eines Kegels ausgebildet sind.

4. Vorrichtung nach Anspruch 2 oder 3, **dadurch gekennzeichnet, dass** die Fixierungsmittel auf den Anlageflächen angeordnet sind.

5. Vorrichtung nach einem der Ansprüche 2 bis 4, **dadurch gekennzeichnet, dass** die Fixierungsmittel federnd gelagert sind.

6. Vorrichtung nach einem der Ansprüche 1 bis 5, **gekennzeichnet durch** in den Klemmrahmen gegenüberliegend angeordneten Bohrschablonen.

7. Vorrichtung nach einem der Ansprüche 1 bis 6, **gekennzeichnet durch** hydraulische und/oder pneumatische Mittel zum parallelen Verschieben und Feststellen des Abstandes der Klemmrahmen.

8. Vorrichtung nach einem der Ansprüche 1 bis 7, **gekennzeichnet durch** einen insbesondere einstellbaren Anschlag zum Festlegen des Abstandes der Klemmrahmen zu einem Ende des Rundholzes.

9. Vorrichtung nach einem der Ansprüche 1 bis 8, dass die Klemmrahmen spiegelsymmetrisch zueinander ausgebildet sind.

10. Vorrichtung nach einem der Ansprüche 1 bis 9, **dadurch gekennzeichnet, dass** mindestens ein mindestens eine Bohrschablone tragender Klemmrahmen von der Vorrichtung lösbar ist.

11. Vorrichtung nach einem der Ansprüche 1 bis 10, **dadurch gekennzeichnet, dass** mindestens einer der Klemmrahmen, insbesondere der lösbare Klemmrahmen, an einer oder beiden Stirnseiten mindestens eine Markierung zum Ausrichten des Klemmrahmens am Rundholz aufweist.

12. Verfahren zum Abbinden eines Rundholzmastes mit einer Vorrichtung gemäß einem der Ansprüche 1 bis 11 mit den folgenden Verfahrensschritten:
a. Aufschieben der Vorrichtung auf das abzubindende Rundholzmastende und Auflegen des oberen Klemmrahmens auf den Rundholzmast;
b. Ausrichten des Rundholzmastes derart, dass die Bohrbildachse an der Mastachse ausgerichtet ist, wobei die Bohrbildachse parallel zur Längsachse einer Bohrschablone verläuft und die Mastachse eine gedachte Linie zwischen den Mittelpunkten der beiden Mastenden ist;
c. Festklemmen der Vorrichtung;
d. Bohren der benötigten Löcher bzw. Vorbohrungen; und
e. Lösen der Vorrichtung.
